# EUROPEAN PATENT SPECIFICATION

(11) **EP 2 688 271 B1**
(45) Date of publication and mention of the grant of the patent: **23.09.2015**
(21) Application number: 12176855.0
(22) Date of filing: 18.07.2012
(51) Int. Cl.: H04M 1/23, G06F 1/16, G06F 3/02, H01H 13/86, H04M 1/02

(54) **APPARATUS PERTAINING TO HINGED ROWS OF KEYCAPS**
VORRICHTUNG IM ZUSAMMENHANG MIT KLAPPBAREN TASTENFELDREIHEN
APPAREIL RELATIF AUX LIGNES ARTICULÉES DE TOUCHES

(43) Date of publication of application: 22.01.2014
(73) Proprietor: BlackBerry Limited, Waterloo, ON N2K 0A7 (CA)
(72) Inventor: Griffin, Jason Tyler, Waterloo, Ontario N2L 3W8 (CA); Kayser, Daniel Jordan, London, N1 7AS (GB)
(74) Representative: Noble, Nicholas

(56) References cited:
- EP-A1- 1 795 994
- EP-A1- 2 141 897
- WO-A1-01/54384

## Description

### Field of Technology

The present disclosure relates to keyboards.

### Background

Keyboards of various kinds are known in the art and are typically comprised of a plurality of keycaps (such as depressible buttons, touch-sensitive surfaces, and so forth) that permit a user to selectively enter any of a variety of alphanumeric characters and/or to input corresponding instructions or selections. Two common examples in these regards are the so-called QWERTY keyboard and the so-called telephone keypad.

Small portable communication devices (such as so-called smartphones) often include a keyboard. To minimize the device's footprint those keyboards are sometimes disposed on a lower plane than the device's display. In these cases the display and the keyboard sometimes slide parallel to one another to bring the keyboard into a deployed position. In some other cases the keyboard comprises two or more multi-row segments that pivot in a planar fashion with respect to one another to permit the keyboard segments to be stored, again parallel to the device's display, as a stack of planar members within the device.

Though useful in many instances, such approaches do not meet all requirements for all application settings.

EP 1795994 is directed to a handheld electronic device (4) having a display (56) and a keypad (32), with the keypad (32) being movable among a number of configurations that enable the "real estate" occupied by the keypad (32) to be increased or decreased, and to correspondingly enable the viewable area of the display (56) to be relatively decreased and increased, respectively. In one example, a first keypad portion (44) and a second keypad portion (44) can be disposed substantially coplanar when the keypad (32) is in a first position and disposed noncoplanar when in a second position. In another example, a device (4) can include a keypad (32) and a flexible sheet-like piece of covering material (40) structured to overlie a display, with the keypad (32) and the piece of covering material (40) being connected together. In another example, a keypad assembly (32) can being movable between a first position wherein at least a portion of the keypad (32) overlies a first area of a display (56) and is operable to provide input, and a second position overlying one of none of the display (56) and a second area of the display (56) smaller than the first area. In another example, a method of protecting a device (4) includes overlying at least a portion of a display (56) with at least a portion of a keypad apparatus (32). In another example, a method of adjusting a device (4) between an ON condition and an OFF condition includes translating at least a portion of a keypad assembly (32) between a first position and a second position.

WO 01/54384 is directed to an electronic device such as a mobile telephone having a large touch screen display (1). On top of the display a flexible keypad (11) can be pulled up to more or less cover it. The keys (19) of the keypad act at their bottom against the surface of the display and produce, when depressed by the fingers of a user, a pressing force on the surface of the display, that by electronic circuits in the device is translated to a corresponding input figure or letter. The keypad can be the Venetian blind type and comprise lamellae (13) hinged to each other, so that each depressible key is placed completely on a single lamella. Guides (15) for the keypad are arranged at two opposite edges of the display, not allowing any part of the keypad to project outside the general profile of the device when moving the keypad. Such a movable keypad can be easily handled, is robust and not apt to be broken.

EP 2141897 is directed to a keypad lifting mechanism including a fixing board, a first board, a guiding frame and a second board. Two stopping members are fixed on the fixing board. The first board is slidable relative to the fixing board. A plurality of wedges are formed on the guiding frame. The second board includes a plurality of protrusions. The second board slides up or down relative to the first board by engagement of the protrusions of the second board and the wedges of the first board. When the first board is moved relative to the fixing board, the guiding frame is stopped by the stopping members and the second board moving relative to the guiding frame so as to move up or down the second board.

### Brief Description of the Drawings

FIG. 1 is a perspective view in accordance with the disclosure.
FIG. 2 is a perspective view in accordance with the disclosure.
FIG. 3 is a perspective view in accordance with the disclosure.
FIG. 4 is a perspective view in accordance with the disclosure.
FIG. 5 is a side-elevational sectioned view in accordance with the disclosure.
FIG. 6 is a side-elevational sectioned view in accordance with the disclosure.
FIG. 7 is a side-elevational sectioned view in accordance with the disclosure.
FIG. 8 is a side-elevational sectioned view in accordance with the disclosure.
FIG. 9 is a side-elevational sectioned view in accordance with the disclosure.
FIG. 10 is a side-elevational sectioned view in accordance with the disclosure.
FIG. 11 is a side-elevational sectioned view in accordance with the disclosure.
FIG. 12 is a side-elevational sectioned view in accordance with the disclosure.
FIG. 13 is a side-elevational sectioned view in accordance with the disclosure.
FIG. 14 is a side-elevational sectioned view in accordance with the disclosure.
FIG. 15 is a side-elevational sectioned view in accordance with the disclosure.
FIG. 16 is a block diagram in accordance with the disclosure.

### Detailed Description

The following describes an apparatus and method pertaining to a plurality of physically-discrete keycap rows, wherein each of the physically-discrete keycap rows is hingeably coupled to at least one adjacent one of the physically-discrete keycap rows. So configured, and by one approach, these physically-discrete keycap rows can be stored in a manner somewhat akin to a rolled-up state (such that, for example, at least two of the physically-discrete keycap rows are disposed substantially back-to-back when in a collapsed and stored state).

Using this approach, a keyboard comprised of such physically-discrete keycap rows can be disposed, at least in part, within a sliding tray that moves these physically-discrete keycap rows between a collapsed state and a deployed state. As one example in these regards, the physically-discrete keycap rows can include one or more guide pins that are received and guided by one or more tracks provided within the sliding tray. Such a sliding tray can further serve, if desired, to provide one or more components configured to both urge one or more of the physically-discrete keycap rows to a deployed state (and/or to a non-deployed state) and to provide support beneath two or more of those physically-discrete keycap rows when in the deployed state.

So configured, and by way of example, a portable communication device can have an upper surface that essentially comprises only a display. When the user wishes to make use of a physical keyboard (as versus a virtual keyboard displayed on the display), the user slides the sliding tray into an extended position. This movement of the sliding tray, in turn, can cause the rolled-up physically-discrete keycap rows to unroll into a deployed state where the physically-discrete keycap rows are all essentially coplanar with one another. The user can then return the physically-discrete keycap rows to a stored/collapsed state by simply sliding the sliding tray back to a closed position.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

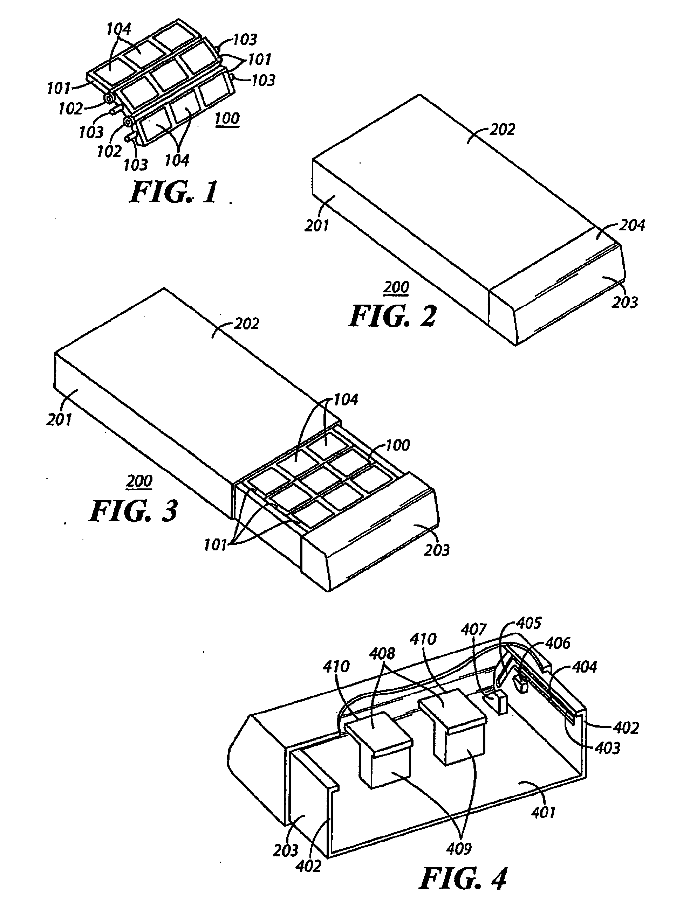

FIG. 1 presents an illustrative example of a keyboard 100 comprised of such a plurality of physically-discrete keycap rows 101. As used herein, this reference to being "physically discrete" will be understood to refer to components that are non-integral to one another and hence that exist as separate structural entities from one another. That said, these physically-discrete keycap rows 101 are hingeably coupled to one another such that each such keycap row 101 is hingeably coupled to at least one adjacent keycap row 101.

In this illustrative example there are three such physically-discrete keycap rows 101. These teachings will readily accommodate, however, any plural number of such keycap rows including keyboards having four keycap rows, five keycap rows, and so forth.

By one approach the physically-discrete keycap rows 101 are hingeably coupled to one another by hinges that extend for the length of each such physically-discrete keycap row 101. In the illustrative example provided the hinges are located along an underside edge in order to permit the upper surfaces of the physically-discrete keycap rows 101 to be both flush and closely adjacent to one another when the physically-discrete keycap rows 101 are in a deployed state.

By one approach, and as illustrated, rollers 102 are disposed coaxially with such hinges. These rollers 102 can aid in smoothly moving and supporting the physically-discrete keycap rows 101 as they move between deployed and non-deployed states. One or more of the physically-discrete keycap rows 101 can also include one or more pins 103 that extend outwardly of the side edges of such physically-discrete keycap rows 101. As will be illustrated below in more detail, some of these pins 103 can fit within and be guided by a corresponding track and others of these pins 103 interact with a corresponding block to again aid in facilitating proper movement of the physically-discrete keycap rows 101 between deployed and non-deployed states.

In the illustrative example shown, each of the physically-discrete keycap rows 101 comprises a row of keycaps (some of which are denoted by reference numeral 104). For the sake of simplicity in this example each of the physically-discrete keycap rows 101 has three such keycaps 104. It will be understood that these teachings will accommodate essentially any number of keycaps, however. By one approach, for example, the number of rows and the number of keycaps can be sufficient to comprise a standard QWERTY keyboard. It will also be understood that these teachings do not require that each of the physically-discrete keycap rows 101 has a same and identical number of keycaps 104.

It will be similarly understood that the keycaps 104 themselves can comprise any of a variety of key-based mechanisms. This can include, by way of example, touch-sensitive surfaces that do not move when asserted as well as moving surfaces such as dome switch-based keys.

Such a keyboard 100 can be collapsed into a non-deployed state by moving the physically-discrete keycap rows 101 about their hinges. By moving the physically-discrete keycap rows 101 towards a kind of rolled-up configuration, the non-deployed keyboard 100 can fit within a relatively small volume.

Such a keyboard 100 can serve in a variety of application settings. Referring to FIG. 2, this description will presume (for the sake of illustration and without intending any limitations in these regards) that the keyboard 100 comprises a part of a portable communication device 200 such as a so-called smartphone. This portable communication device 200 has a housing 201 that supports a display 202. This portable communication device 200 also includes a sliding tray 203 that comprises a first end 204 of the portable communication device 200. With the sliding tray 203 fully withdrawn inside the housing 201 the keyboard 100 is stored out of sight in a manner that adds little if anything to the footprint of the portable communication device 200.

FIG. 3 depicts the sliding tray 203 in a fully-extended state. So extended, the keyboard 100 is similarly extended to a deployed state. In this deployed state the physically-discrete keycap rows 101 are disposed substantially co-planar to one another. So configured the user can readily utilize the keycaps 104 of the deployed keyboard 100 to, for example, input alphanumeric content, navigate menus, make selections, and so forth.

There are various ways by which such a keyboard 100 can be moved between a non-deployed collapsed state and a deployed state. For the sake of illustration one particular approach in these regards will now be presented. It will be understood that these teachings are not to be viewed as being limited by this example's points of specificity.

FIG. 4 provides an illustrative example of the aforementioned sliding tray 203. In this example the sliding tray 203 has a partially-open interior space that can serve, at least in part, to contain at least a portion of the physically-discrete keycap rows 101 when the latter are in a non-deployed, collapsed state. This space 401 is partially bounded by side walls 402 that are sized and configured to fit within (and slidingly move within) a corresponding space in the housing 201 of the aforementioned portable communication device 200.

These side walls 402 can serve to support a number of features that serve to interact in various ways with the physically-discrete keycap rows 101. For example, a track 403 comprising a slot can be formed in both of the side walls 402. This track 403 can be sized to accommodate at least some of the aforementioned pins 103 to thereby guide the latter (and hence the physically-discrete keycap rows 101) when moving the physically-discrete keycap rows 101 between deployed and non-deployed states. In this example each such track 403 includes a longitudinal portion 404 that runs parallel to the side wall 402 and an angled portion 405 that turns downwardly at an end portion of the track 403.

As another example of a supported feature, each of the side walls 402 can support a step 406 that extends outwardly from the side wall 402. Each such step 406 can include a horizontal upper surface, a vertical rear surface, and an inclined front surface. Another related feature can comprise a block 407 that extends outwardly of the side walls 402 and that is disposed towards the front of the sliding tray 203. This block 407 can have a horizontal upper surface, a vertical rear surface, and an inclined front surface. Both the steps 406 and the blocks 407 can aid in moving the physically-discrete keycap rows 101 in a desired fashion as described below in more detail.

In this illustrative example the sliding tray 203 also includes two side-by-side plates 408 that rest atop corresponding pedestals 409. These plates 408 have planar upper surfaces that are configured and disposed to provide support to at least some of the deployed physically-discrete keycap rows 101 and a rounded leading edge 410 that can aid in causing the physically-discrete keycap rows 101 to move from a non-deployed position to a deployed state.

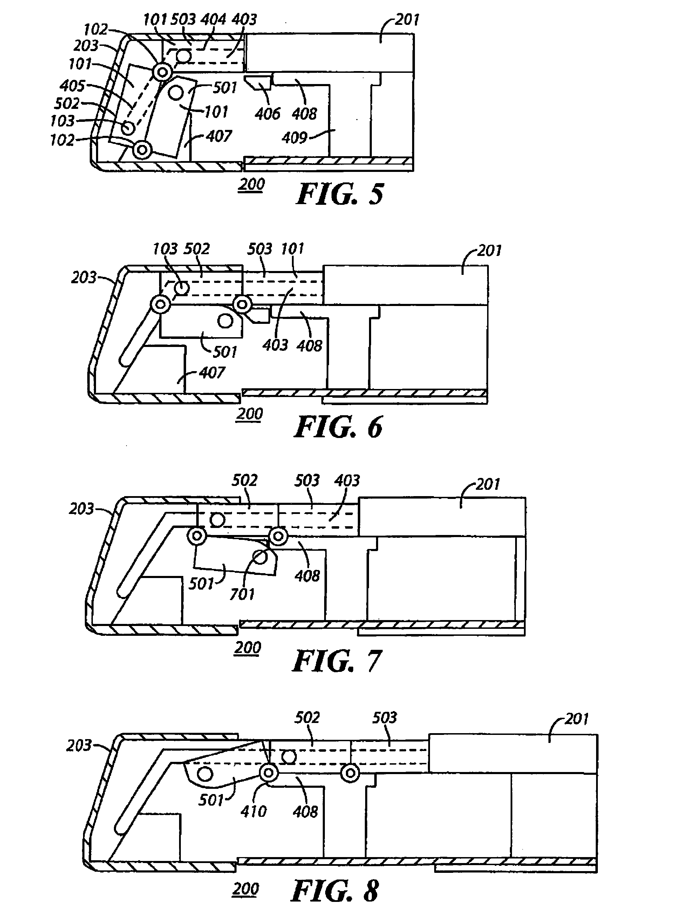

FIG. 5 depicts the physically-discrete keycap rows 101 in a fully collapsed, non-deployed state. In this example, two of the physically-discrete keycap rows 501 and 502 are disposed substantially back-to-back with one another and are positioned, as a pair, at a steep downward angle. The pin 103 for the second physically-discrete keycap row 502 is disposed within and near the end of the aforementioned track 403. A third physically-discrete keycap row 503 is positioned coplanar to the housing 201. So configured, the entire keyboard 101 is stored fully within the sliding tray 203 in a manner that contributes little to the footprint of the portable communication device 200.

FIG. 6 depicts the sliding tray 203 moved outwardly about the width of a single one of the physically-discrete keycap rows 101 to thereby expose one 503 of the physically-discrete keycap rows 101. During this movement the pin 103 for the second physically-discrete keycap row 502 followed the track 403 to thereby rotate the second physically-discrete keycap row 502 about the hinged coupling between itself and the already-planar physically-discrete keycap row 503 to reach a coplanar disposition with the latter physically-discrete keycap row 503. At this point the remaining physically-discrete keycap row 501 remains disposed back-to-back with the middle physically-discrete keycap row 502.

FIG. 7 depicts the sliding tray 203 moved forward to a point where the aforementioned plates 408 begin to contact (at a point denoted by reference numeral 701) the last of the physically-discrete keycap rows 501 to thereby cause the latter to rotate about its hinged coupling to the middle physically-discrete keycap row 502. If desired, and as illustrated, the underside leading edge of this last physically-discrete keycap row 501 can be curved to form a cam surface that can interact with the curved leading edges 410 of the plates 408 to thereby facilitate causing that rotation of this particular physically-discrete keycap row 501.

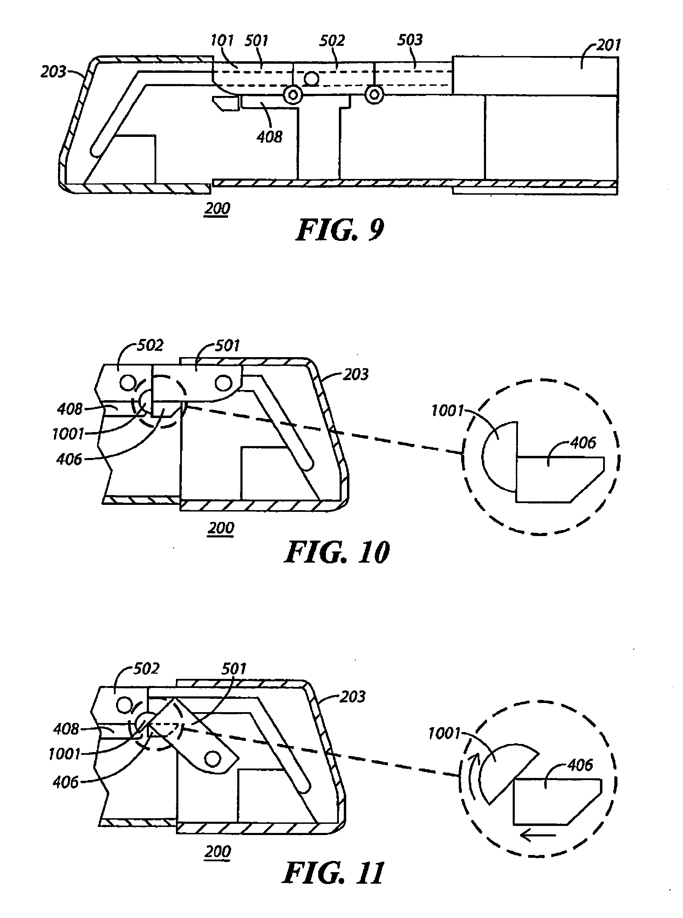

FIG. 8 depicts the further rotation of this last physically-discrete keycap row 501 as the plate 408 continues to act thereupon as the sliding tray 203 continues sliding forward from within the housing 201. At this point this physically-discrete keycap row 501 is now nearly coplanar with the other two physically-discrete keycap rows 502 and 503. FIG. 9, in turn, illustrates the sliding tray 203 now fully withdrawn to its fully-deployed position. Here, the fully-deployed keyboard 100 has its physically-discrete keycap rows 501, 502, and 503 all coplanar with one another and disposed flush to one another as well. In addition, the plate 408 now supports the two furthest-extended physically-discrete keycap rows 501 and 502 to provide a firm surface to hold the physically-discrete keycap rows in place in opposition to a user's touches.

Returning the sliding tray 203 to a fully-inserted position within the housing 201, in turn, causes the keyboard 101 to re-collapse and return to a non-deployed, stored position. FIG. 10 depicts the sliding tray 203 inserted to a point where the plate 408 no longer provides support for the furthest-extended physically-discrete keycap row 501. In addition, block 406 now contacts a ridge component 1001 that comprises a part of the furthest-extended physically-discrete keycap row 501.

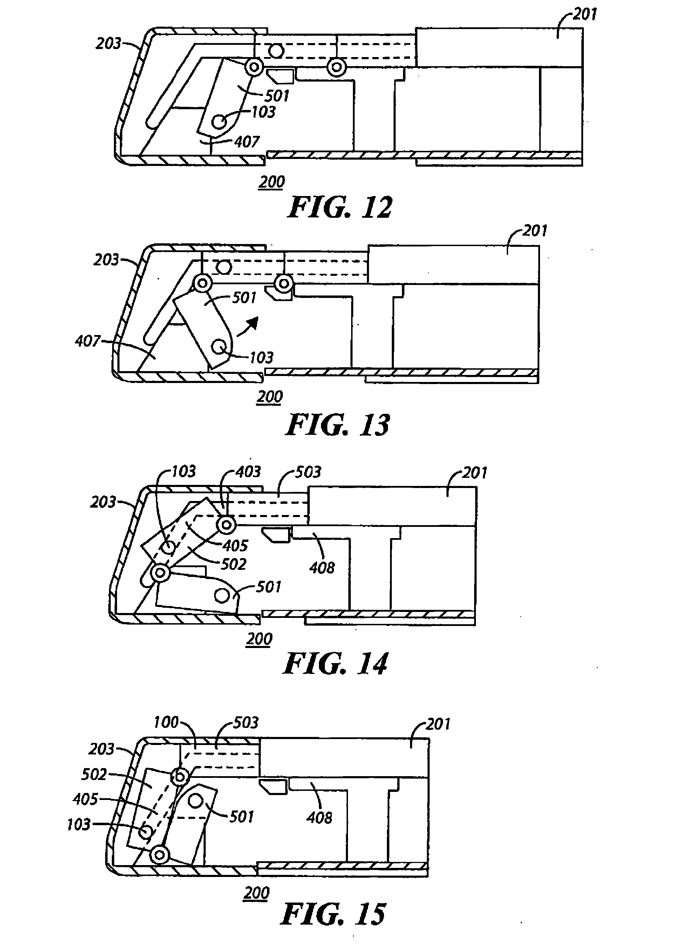

In FIG. 11, the sliding tray 203 has moved a bit further into the housing 201 and the aforementioned block 406 pushes against the ridge component 1001 to cause the furthest-extended physically-discrete keycap row 501 to rotate downwardly about its hinged coupling to the next-adjacent physically-discrete keycap row 502. As the sliding tray 203 continues to move inwardly of the housing 201, and as shown in FIG. 12, the aforementioned block 407 finally contacts the pin 103 that extends laterally and outwardly of the furthest-extended physically-discrete keycap row 501. This block 407 moves with the sliding tray 203 and, as shown in FIG. 13, causes the latter physically-discrete keycap row 501 to continue to rotate about its hinged coupling.

Eventually, the pin 103 for the middle physically-discrete keycap row 502 enters the downwardly-angled portion 405 of the aforementioned track 403 (FIG. 14). This pin 103 continues downwardly along this portion 405 until the sliding tray 203 reaches a fully-closed position as shown in FIG. 15. As this occurs the furthest-extended physically-discrete keycap row 501 returns to its back-to-back orientation with respect to the middle physically-discrete keycap row 502 to thereby return the keyboard 100 to its collapsed, fully-non-deployed state.

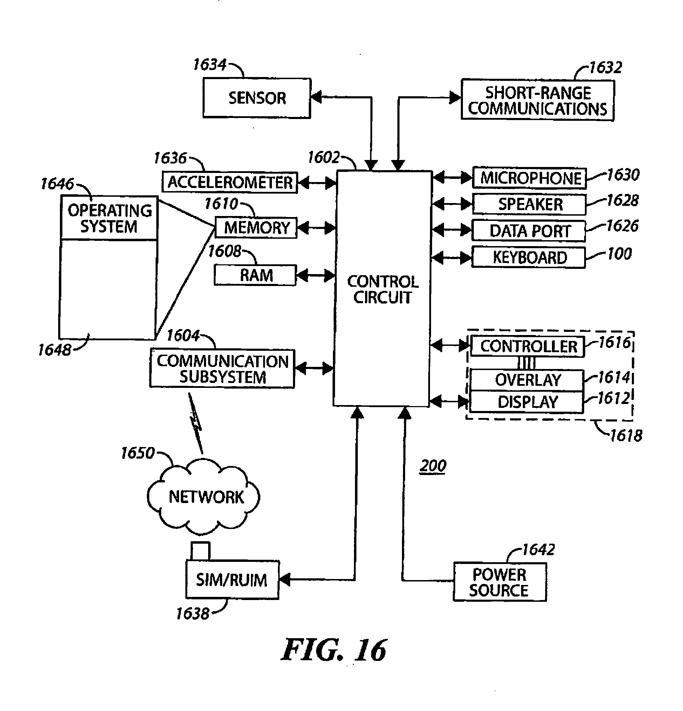

As noted above, such a keyboard 100 can be readily employed in conjunction with a portable communication device 200. Referring to FIG. 16 a more specific example in those regards will be provided. Again, the specifics of this example are not to be taken as limitations with respect to the disclosed concepts.

An exemplary portable communication device 200 includes a control circuit 1602 that controls the overall operation of the portable electronic device. Communication functions, including data and voice communications, are performed through a communication subsystem 1604. The communication subsystem receives messages from and sends messages to a wireless network 1650. The wireless network 1650 may be any type of wireless network, including, but not limited to, data wireless networks, voice wireless networks, and networks that support both voice and data communications. A power source 1642, such as one or more rechargeable batteries or a port to an external power supply, powers the device 200.

The control circuit 1602 interacts with other elements, such as Random Access Memory (RAM) 1608, memory 1610, a display 1612 with a touch-sensitive overlay 1614 operably coupled to an electronic controller 1616 that together comprise an optional touch-sensitive display 1618, a keyboard 100 as described above, a data port 1626, a speaker 1628, a microphone 1630, a short-range communication subsystem 1632, a sensor 1634 that detects when the keyboard 100 is in the deployed and/or non-deployed state as described above, and an accelerometer 1636.

To identify a subscriber for network access, the portable communication device 200 may utilize a Subscriber Identity Module or a Removable User Identity Module (SIM/RUIM) card 1638 for communication with a network, such as the wireless network 1650. Alternatively, user identification information may be programmed into the memory 1610.

The portable communication device 200 includes an operating system 1646 and software programs, applications, or components 1648 that are executed by the control circuit 1602 and are typically stored in a persistent, updatable store such as the memory 1610. Additional applications or programs may be loaded onto the portable electronic device through the wireless network 1650, the data port 1626, the short-range communications subsystem 1632, or any other suitable subsystem as may be available. The memory 1610 may comprise a non-transitory storage media that stores executable code, when executed, causes one or more of functions or actions as described herein.

By one approach, the control circuit 1602 can be configured to automatically respond to the deployed and non-deployed state of the keyboard 100 (as determined, for example, via the aforementioned sensor 1634) in any of a variety of ways. As one simple example in these regards, when the keyboard 100 is fully deployed the control circuit 1602 can present, via the display 1612, a user interface that presumes data entry via the keyboard 100. When, however, the keyboard 100 is stowed within the portable communication device 200 as described above, the control circuit 1602 can be configured to present a user interface that presumes data entry via the touch-based overlay 1614.

So configured, a keyboard can comprise a plurality of physically-discrete keycap rows, wherein each of these rows is hingeably coupled to at least one adjacent row. These physically-discrete keycap rows can be stored in a manner somewhat akin to a rolled-up state (such that, for example, at least two of the physically-discrete keycap rows are disposed substantially back-to-back when in a collapsed and stored state). Such a keyboard can be disposed, at least in part, within a sliding tray that moves these rows between a collapsed state and a deployed state. Such a device can have an upper surface that essentially comprises only a display. When the user wishes to make use of a physical keyboard (as versus a virtual keyboard displayed on the display), the user slides the sliding tray into an extended position. This movement of the sliding tray, in turn, can cause the rolled-up physically-discrete keycap rows to unroll into a deployed state where the physically-discrete keycap rows are all essentially coplanar with one another. The user can then return the physically-discrete keycap rows to a stored/collapsed state by simply sliding the sliding tray back to a closed position.

These teachings are readily employed in conjunction with a variety of form factors and differently-sized devices and readily permit a user to have access to a physical keyboard when such is desired and to stow that physical keyboard in a manner that does not substantially increase the device's footprint.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a plurality of physically-discrete keycap rows (101), wherein each of the physically-discrete keycap rows is hingeably coupled to at least one adjacent one of the physically-discrete keycap rows;
a housing (201);
a display (202) disposed on the housing (201); and
a sliding tray (203) coupled to the physically-discrete keycap rows (101) and arranged to slide relative to the housing (201) between a non-deployed state in which the plurality of physically-discrete keycap rows (101) are received within the housing (201) and a deployed state in which the plurality of physically-discrete keycap rows (101) are substantially coplanar to one another and the display (202).

2. The apparatus of claim 1 wherein the apparatus comprises a portable communication device (200).

3. The apparatus of any of claims 1 through 2 further comprising:
a sliding tray (203) configured to move the physically-discrete keycap rows between the collapsed state and the deployed state.

4. The apparatus of claim 3 wherein at least one of the physically-discrete keycap rows includes at least one guide pin (103) and where the sliding tray includes at least one track (403) that receives and guides the at least one guide pin.

5. The apparatus of claim 3 wherein the sliding tray includes at least one component (408) configured to both urge at least one of the physically-discrete keycap rows to the deployed state and to provide support beneath at least two of the physically-discrete keycap rows when in the deployed state.

6. The apparatus of claim 1 wherein the physically-discrete keycap rows comprise, at the least, a QWERTY keyboard.

7. The apparatus of any of claims 1 through 6 wherein the physically-discrete keycap rows are configured to selectively pivot about hinged couplings to move between the collapsed state and the deployed state.

8. The apparatus of claim 7 wherein at least two of the physically-discrete keycap rows are disposed substantially back-to-back when in the collapsed state.

9. The apparatus of claim 8 wherein the physically-discrete keycap rows are configured to be disposed at one end of the display when in the collapsed state.

## Patentansprüche

1. Gerät mit:
einer Vielzahl von physisch getrennten Tastenkappenreihen (101), wobei jede der physisch getrennten Tastenkappenreihen an mindestens eine angrenzende der physisch getrennten Tastenkappenreihen klappbar gekoppelt ist,
einem Gehäuse (201),
einer Anzeige (202), die an dem Gehäuse (201) angeordnet ist, und
einem Schiebetablett (203), das an die physisch getrennten Tastenkappenreihen (101) gekoppelt und dazu ausgelegt ist, sich relativ zu dem Gehäuse (201) zwischen einem Nicht-Verwendungs-Zustand, in dem die Vielzahl von physisch getrennten Tastenkappenreihen (101) in dem Gehäuse (201) aufgenommen sind, und einem Verwendungs-Zustand zu bewegen, in dem die Vielzahl von physisch getrennten Tastenkappenreihen (101) zueinander und zur Anzeige (202) im Wesentlichen komplanar sind.

2. Gerät nach Anspruch 1, wobei das Gerät eine tragbare Kommunikationsvorrichtung (200) aufweist.

3. Gerät nach Anspruch 1 oder 2, ferner mit:
einem Schiebetablett (203), das dazu konfiguriert ist, die physisch getrennten Tastenkappenreihen zwischen dem eingezogenen Zustand und den Verwendungs-Zustand zu bewegen.

4. Gerät nach Anspruch 3, wobei mindestens eine der physisch getrennten Tastenkappenreihen mindestens einen Führungsstift (103) aufweist, und wobei das Schiebetablett mindestens eine Schiene (403) aufweist, die den mindestens einen Führungsstift aufnimmt und führt.

5. Gerät nach Anspruch 3, wobei das Schiebetablett mindestens eine Komponente (408) aufweist, die dazu konfiguriert ist, sowohl mindestens eine der physisch getrennten Tastenkappenreihen in den Verwendungs-Zustand zu drängen als auch in dem Verwendungs-Zustand eine Stütze unter mindestens zweien der physisch getrennten Tastenkappenreihen bereitzustellen.

6. Gerät nach Anspruch 1, wobei die physisch getrennten Tastenkappenreihen zumindest eine QWERTY-Tastatur aufweisen.

7. Gerät nach einem der Ansprüche 1 bis 6, wobei die physisch getrennten Tastenkappenreihen dazu konfiguriert sind, selektiv um die klappbaren Kopplungen zu drehen, um sich zwischen dem eingezogenen Zustand und den Verwendungs-Zustand zu bewegen.

8. Gerät nach Anspruch 7, wobei mindestens zwei der physisch getrennten Tastenkappenreihen im eingezogenen Zustand im Wesentlichen Rücken an Rücken angeordnet sind.

9. Gerät nach Anspruch 8, wobei die physisch getrennten Tastenkappenreihen dazu konfiguriert sind, in dem eingezogenen Zustand an einem Ende der Anzeige angeordnet zu sein.

## Revendications

1. Appareil comprenant :
une pluralité de rangées de capuchons de touches physiquement distincts (101), dans lequel chacune des rangées de capuchons de touches physiquement distincts est accouplée de manière articulée à au moins une rangée adjacente de capuchons de touches physiquement distincts ;
un boîtier (201) ;
un écran d'affichage (202) disposé sur le boîtier (201) ; et
un tiroir coulissant (203) couplé aux rangées de capuchons de touches physiquement distincts (101) et disposé de manière à coulisser par rapport au boîtier (201) entre un état non déployé dans lequel la pluralité de rangées de capuchons de touches physiquement distincts (101) est logée dans le boîtier (201) et un état déployé dans lequel la pluralité de rangées de capuchons de touches physiquement distincts (101) sont substantiellement coplanaires entre elles et avec l'écran d'affichage (202).

2. Appareil selon la revendication 1, dans lequel l'appareil consiste en un dispositif de communication portatif (200).

3. Appareil selon l'une quelconque des revendications 1 et 2, comprenant en outre :
un tiroir coulissant (203) configuré pour déplacer les rangées de capuchons de touches physiquement distincts entre l'état non déployé et l'état déployé.

4. Appareil selon la revendication 3, dans lequel au moins une des rangées de capuchons de touches physiquement distincts comprend au moins une broche de guidage (103) et dans lequel le tiroir coulissant comprend au moins une rainure (403) qui reçoit et guide ladite au moins une broche de guidage.

5. Appareil selon la revendication 3, dans lequel le tiroir coulissant comprend au moins un composant (408) configuré à la fois pour pousser l'une des rangées de capuchons de touches physiquement distincts dans l'état déployé et pour offrir un support au-dessous d'au moins deux des rangées de capuchons de touches physiquement distincts lorsqu'elles sont dans l'état déployé.

6. Appareil selon la revendication 1, dans lequel les rangées de capuchons de touches physiquement distincts constituent au moins un clavier QWERTY.

7. Appareil selon l'une quelconque des revendications 1 à 6, dans lequel les rangées de capuchons de touches physiquement distincts sont configurées pour pivoter sélectivement autour d'accouplements articulés afin de passer de l'état non déployé dans l'état déployé.

8. Appareil selon la revendication 7, dans lequel au moins deux des rangées de capuchons de touches physiquement distincts sont disposées substantiellement dos à dos lorsqu'elles sont dans l'état non déployé.

9. Appareil selon la revendication 8, dans lequel les rangées de capuchons de touches physiquement distincts sont configurées pour être disposées à une extrémité de l'écran d'affichage lorsqu'elles sont dans l'état non déployé.
